# EUROPÄISCHE PATENTSCHRIFT

(11) **EP 2 456 661 B1**
(45) Veröffentlichungstag und Bekanntmachung des Hinweises auf die Patenterteilung: **21.01.2015**
(21) Anmeldenummer: 09777342.8
(22) Anmeldetag: 21.07.2009
(51) Int. Cl.: B64C 1/20, B64C 1/18, B64D 9/00

(54) **BODENELEMENT FÜR EIN LADEDECK EINES FLUGZEUGS**
FLOOR ELEMENT FOR A LOADING DECK OF AN AIRCRAFT
ÉLÉMENT DE PLANCHER DESTINÉ AU PONT DE CHARGEMENT D UN AVION

(43) Veröffentlichungstag der Anmeldung: 30.05.2012
(73) Patentinhaber: Telair International GmbH, 83714 Miesbach (DE)
(72) Erfinder: HUBER, Thomas, 83727 Schliersee (DE)
(74) Vertreter: Bohnenberger, Johannes
(86) Internationale Anmeldenummer: PCT/EP2009/005294
(87) Internationale Veröffentlichungsnummer: WO 2011/009474

(56) Entgegenhaltungen:
- WO-A1-99/25601
- DE-A1- 10 204 024
- DE-A1- 19 627 846
- DE-A1-102005 007 308
- FR-A1- 2 879 998
- JP-A- 2005 206 139
- US-A- 6 039 288
- US-A1- 2007 125 908

## Beschreibung

Die Erfindung betrifft ein Bodenelement für ein Ladedeck eines Flugzeugs nach dem Oberbegriff des Patentanspruches 1.

Das Ladedeck eines Flugzeugs muss bestimmten Anforderungen genügen. Zum einen muss das Ladedeck Funktionseinheiten aufweisen, über welche der Frachtraum beladen und entladen werden kann und über welche die Ladung während des Fluges auf dem Ladedeck gesichert werden kann. Weiterhin sollen derartige Ladedecks leicht und schnell umrüstbar sein, wobei auch die Umrüstung vom Ladedeck in ein Passagierdeck notwendig sein kann.

Aus der DE 197 12 278 B4 ist ein Bodenelement der eingangs genannten Art bekannt, das ein Hohlprofil mit einer Deckplatte und einer Bodenplatte umfasst, die durch Stege miteinander verbunden sind. In dieser Bodenplatte sind Kugelelemente als Funktionselemente angeordnet. Weiterhin sind Wannen vorgesehen, um andersartige Funktionselemente, z.B. Rollenantriebseinheiten in dem Bodenelement zu montieren. Das bekannte Bodenelement wird jedoch nur als "Sonderbauform" im Einladebereich eines Ladedecks verwendet, also dort, wo die Ladung nach einem Einbringen in den Frachtraum gegebenenfalls gedreht werden muss.

Weiterhin ist aus der DE 19627846 C2 ein Funktionselement zum Einbau in ein Ladedeck bekannt, das einen Wendekörper umfasst, der eine schnelle Umrüstung des Ladedecks erlaubt.

Der Aufbau eines Ladedecks für ein Flugzeug aus den bekannten Elementen ist relativ aufwändig. Insbesondere müssen immer besondere Vorkehrungen getroffen werden, um in den Frachtraum eindringende Flüssigkeiten abzuleiten und so zu behandeln, dass eine Störung beim Be- und Entladen nicht auftritt.

Die US 6 039 288 A beschreibt ein Bodenelement mit einer Deckplatte und einer Bodenplatte, die durch Stege verbunden sind. Das Bodenelement hat Öffnungen an der Ober- und Unterseite, so dass Flüssigkeiten eindringen können und unmittelbar wieder abgeführt werden. Das Bodenelement der US 6 039 288 A ist an seinen Seiten offen und kann dort durch Seitenprofile verschlossen werden. Im Endeffekt ist dieses Bodenelement so ausgebildet, dass es kein Hindernis für Flüssigkeiten darstellt. Zum kanalisierten Abführen ist das Bodenelement nicht geeignet.

Die DE 102 04 024 A1 beschreibt eine Wanne, die unterhalb von Funktionselementen an Bodenelementen befestigt werden kann.

Auch das Bodenelement der DE 10 2005 007 308 A1 ist für die kontrollierte Kanalisation von Flüssigkeit ungeeignet.

Der Erfindung liegt die Aufgabe zu Grunde, ein Bodenelement für ein Ladedeck eines Flugzeugs dahin gehend aufzuzeigen, dass eine Vereinfachung des Gesamtaufbaus bei verbesserten Betriebseigenschaften sichergestellt wird.

Diese Aufgabe wird durch ein Bodenelement nach Anspruch 1 gelöst.

Ein wesentlicher Punkt der Erfindung liegt darin, dass das als Hohlprofil aufgebaute Bodenelement eine zweite Funktion erfüllt, nämlich dass es als Leitung zum Durchleiten von Flüssigkeiten und/oder Gasen ausgebildet ist. Dadurch ist es möglich, eindringende Flüssigkeiten abzuleiten. Weiterhin wird dadurch, dass das Bodenelement zum Durchleiten von Gasen, also dicht ausgebildet ist, sichergestellt, dass die Abschnitte oberhalb des Ladedecks und unterhalb des Ladedecks zumindest in den Bereichen, in denen das Bodenelement montiert ist, gasdicht voneinander getrennt sind. Hierbei wird natürlich davon ausgegangen, dass die Bodenelemente im Wesentlichen das gesamte Ladedeck darstellen, wobei vorteilhafterweise die Bodenelemente so groß gefertigt sind, dass sie den Laderaum in seiner Querdimension überspannen, so dass Dichtarbeiten zwischen den verschiedenen Bodenelementen minimiert werden.

Erfindungsgemäß bildet die Bodenplatte zusammen mit randseitigen Stegen eine flüssigkeitsdichte Wanne. Es kommt also in diesem Fall nicht darauf an, wie die Deckplatte aussieht, es kommt vielmehr ausschließlich darauf an, dass alle Flüssigkeiten, die anfallen, von der Wanne aufgefangen werden. Es ist sogar so, dass nicht nur die Einbauöffnungen für die üblichen Funktionselemente Durchlässe für anfallendes Wasser bilden, es werden vielmehr vorzugsweise auch zusätzlich Entwässerungsöffnungen vorgesehen, welche den Laderaum mit dem Inneren des Hohlprofils, also mit der "Leitung" verbinden. Es sei an dieser Stelle auch darauf hingewiesen, dass unter einem Hohlprofil nicht nur im Wesentlichen einstückig gefertigte Anordnungen (wie nach der DE 197 12 278 B4) zu verstehen sind, es sind vielmehr auch mehrteilig aufgebaute "Hohlprofile" denkbar. Wichtig ist lediglich, dass zumindest die Bodenplatte (zusammen mit randseitig abschließenden "Seitenwänden") die zum Auffangen der Flüssigkeiten notwendige Wanne bildet.

Vorzugsweise sind an der Bodenplatte Anschlüsse zum Ableiten von Flüssigkeit vorgesehen. Diese Flüssigkeit kann dann in gesonderte Tanks oder eventuell auch direkt nach außen abgelassen werden.

Um sicherzustellen, dass auch bei sehr niedrigen Temperaturen das Flüssigkeitsableitungssystem nicht einfriert, sind vorzugsweise Heizeinrichtungen zum Beheizen des Bodenelements und zwar insbesondere der Bodenplatte vorgesehen, auf welcher die Flüssigkeit liegt bzw. strömt.

Das Hohlprofil bzw. die darin enthaltenen Leitungen werden vorzugsweise an ein Heizungssystem des Flugzeugs derart angeschlossen, dass das Hohlprofil beheizbar ist. So zum Beispiel ist es möglich, so genannte Bleed Air (Zapfluft) der Strahltriebwerke im Wesentlichen über den vollen Profilquerschnitt einzuleiten. Dadurch wird eine Beheizung der Bodenplatten sichergestellt, was nicht nur zum Schutz vor Einfrieren dient, sondern auch aus anderen Gründen sinnvoll sein kann, z.B. dann, wenn entsprechend kälteempfindliche Ladung transportiert wird.

Zusätzlich (oder auch alternativ) umfassen die Heizungseinrichtungen elektrische Heizelemente, insbesondere an den Stellen, die besonders kritisch gegenüber Einfrieren sind. Hier seien beispielsweise die Anschlüsse zum Ableiten der Flüssigkeit erwähnt.

Das Bodenelement umfasst vorzugsweise einstückig eingearbeitete Halteprofile, insbesondere Sitzschienenprofile in der Deckplatte, über welche nicht nur das derart aufgebaute Deck zu einem Passagierdeck umgebaut werden kann, sondern die auch zum Anbringen verschiedenster Funktionseinheiten in an sich bekannter Weise dienen.

Weiterhin ist es von Vorteil, wenn das Bodenelement Funktionselemente, insbesondere Wendekörper derart umfasst, wie sie aus der DE 196 27 846 C2 bekannt sind. Dadurch ist eine besonders schnelle Umgestaltung des Frachtdecks und Anpassung auf die zu befördernde Ladung möglich.

Eine besonders vorteilhafte Verwendung des beschriebenen Bodenelementes ist diejenige zum flüssigkeits- und/oder gasdichten Abtrennen eines Flugzeugfrachtraums von einem darunter liegenden Bilgenraum. Dadurch kann ohne zusätzliche Dichtelemente (außer im Bereich zwischen Außenhaut und den Bodenelementen) sichergestellt werden, dass der Bilgenraum getrennt vom Frachtraum bei Bränden mit einem Löschgas gefüllt werden kann. Weiterhin ist die Verwendung des beschriebenen Bodenelements zum Auffangen von Flüssigkeiten, insbesondere zum Auffangen von Wasser besonders vorteilhaft.

Nachfolgend werden bevorzugte Ausführungsformen der Erfindung anhand von Abbildungen näher beschrieben. Hierbei zeigen
- - Fig. 1: einen Querschnitt durch eine erste Ausführungsform der Erfindung,
- - Fig. 2: eine zweite Ausführungsform der Erfindung im Querschnitt,
- - Fig. 3: eine dritte Ausführungsform der Erfindung, und
- - Fig. 4: eine vierte Ausführungsform der Erfindung.

In der nachfolgenden Beschreibung werden für gleiche und gleich wirkende Teile dieselben Bezugsziffern verwendet. Darüber hinaus wird ausdrücklich darauf hingewiesen, dass die dargestellten Größenverhältnisse erheblich von den tatsächlich vorliegenden Größenverhältnissen abweichen, wobei diese Abweichungen zur besseren Darstellbarkeit in den Zeichnungen dienen.

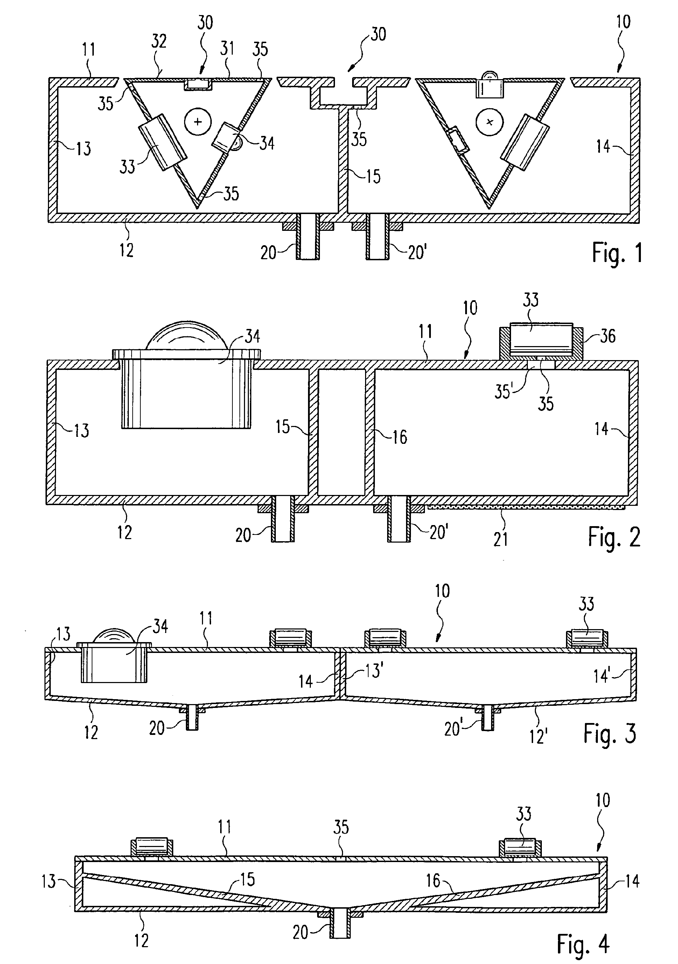

In Fig. 1 ist ein einstückiges, vorzugsweise aus Aluminium stranggepresstes Hohlprofil 10 gezeigt, das eine Deckplatte 11 und eine Bodenplatte 12 umfasst. Die Deckplatte 11 und die Bodenplatte 12 sind über randseitige Stege 13, 14 und einen mittleren Steg 15 miteinander verbunden. Im Bereich des mittleren Stegs 15 ist ein Halteprofil 30 in Form einer Sitzschiene mit eingegossen. Der Innenraum des Halteprofils 30 weist eine Entwässerungsöffnung 35 auf, so dass in diesem Bereich gestaute Flüssigkeit in die aus der Bodenplatte 12 und den randseitigen Stegen 13, 14 gebildete Wanne abgeleitet werden kann.

Weiterhin sind in der Deckplatte 11 Wendekörper 31 eingebaut, die je nach Orientierung eine Funktionsfläche 32 (diese kann glatt sein oder wiederum ein Halteprofil 30 aufweisen), eine Fläche mit eingebauten Rolleneinheiten 33 oder eine Fläche mit eingebauten Kugeleinheiten 34 als Teilabschnitt der Deckplatte 11 bilden. Derartige Wendekörper 31 sind in der DE 196 27 846 C2 genauer dargestellt. Diese Wendekörper 31 weisen ebenfalls Entwässerungsöffnungen 35 auf, so dass sich auch in den Wendekörpern 31 kein Wasser stauen kann.

An der Bodenplatte 12 sind Anschlüsse 20, 20' angebracht, über welche das Innere des Hohlprofils 10 mit Entwässerungsleitungen verbunden werden kann, um eingedrungenes Wasser abzuführen.

Die in Fig. 2 gezeigte Ausführungsform der Erfindung unterscheidet sich von der nach Fig. 1 dadurch, dass die Funktionselemente, nämlich eine Kugeleinheit 34 oder eine in einer Montageschiene 36 montierte Rolleneinheit auf bzw. in der Deckplatte 11 montiert sind. Das Innere der Montageschiene 36, die natürlich auch zur Aufnahme von Rollenantriebseinheiten oder Riegelelementen dienen kann, wird über eine Entwässerungsöffnung 35 in der Montageschiene 36 sowie eine korrespondierende Entwässerungsöffnung 35' in der Deckplatte 11 entwässert.

Anstatt des einzigen Steges 15 (wie in Fig. 1) sind bei der Ausführungsform nach Fig. 2 zwei die Deckplatte 11 und die Bodenplatte 12 verbindende Stege 15, 16 vorgesehen. Der Raum zwischen den Stegen 15, 16, der Bodenplatte 12 und der Deckplatte 11 ist somit hermetisch abgedichtet und kann auch zur Durchleitung von Gasen oder Flüssigkeiten dienen, welche einen anderen Druck aufweisen als die übrige Umgebung.

Weiterhin ist bei der Ausführungsform nach Fig. 2 schematisiert ein elektrisches Heizelement 21 gezeigt, das derart angebracht ist, dass die Bodenplatte 12 und zwar insbesondere im Bereich des Anschlusses 20' beheizt wird. Dadurch wird sichergestellt, dass auch bei niedrigen Temperaturen eingeleitetes Wasser nicht friert und somit die Leitung bzw. den Abfluss verstopft. Zusätzlich oder alternativ ist bei einer (nicht in den Zeichnungen gezeigten) Ausführungsform vorgesehen, den Innenraum des Hohlprofils mit einem Heizungssystem des Flugzeugs zu verbinden, das insbesondere Bleed Air aus den Strahltriebwerken umfassen kann. Hierzu eignet sich auch der oben beschriebene, durch die Stege 15, 16 definierte Kanal hervorragend, wobei eine entsprechende Materialdicke der Bodenplatte 12 anzustreben ist, so dass eine hinreichende Wärmeleitung sichergestellt ist.

Die in Fig. 3 gezeigt Ausführungsform der Erfindung unterscheidet sich von der nach Fig. 2 dadurch, dass das Hohlprofil 10 mehrstückig ausgeführt ist. Hierbei ist nur eine einzige Deckplatte 11 vorgesehen, an deren Unterseite zwei Bodenplatten 12, 12' mit ihren jeweiligen, randseitigen Profilen 13, 14 bzw. 13', 14' montiert sind. Dies soll nur ein Beispiel dafür sein, dass eine mehrstückige Ausführung ohne Weiteres möglich ist. Es kann also auch die Deckplatte 11 mehrstückig ausgebildet sein. Wichtig hierbei ist, dass das gesamte Hohlprofil über seine Breite hinweg im Wesentlichen eine einzige, durchgehende "Wanne" bildet.

Weiterhin sind die Bodenplatten 12, 12' derart zur Mitte hin geneigt ausgebildet, dass einfließendes Wasser sich in der Mitte der Bodenplatten 12, 12' sammelt und über dort vorgesehene Anschlüsse 20, 20' in ein entsprechendes Leitungssystem abgeleitet werden kann.

Bei der in Fig. 4 gezeigten Ausführungsform bildet wieder eine einzige Bodenplatte 12 mit randseitigen Stegen 13, 14 eine Wanne, die an eine Deckplatte 11 angeschlossen ist. Die Deckplatte 11 ist wieder (wie oben bereits beschrieben) über eine Entwässerungsöffnung 35 mit dem Innenraum des Hohlprofils verbunden.

Bei dieser Ausführungsform der Erfindung sind die inneren Stege 15, 16 derart geneigt ausgebildet, dass sie ein Ablaufen des eingedrungenen Wassers zur Mitte hin, also zum Anschluss 20 sicherstellen. Auch bei dieser Ausführungsform werden wieder gasdichte Hohlräume zwischen der Bodenplatte 15, den randseitigen Stegen 13, 14 und den inneren Stegen 15, 16 gebildet, welche sich zum Leiten von Flüssigkeiten oder Gasen unter Druck eignen.

Es sei an dieser Stelle auch nochmals bemerkt, dass die gezeigten Bodenelemente zum Aufbau ganzer Flugzeugdecks besonders geeignet sind. Zwischen einzelnen Bodenelementen wären dann Abdichtungen derart vorzusehen, dass nach Möglichkeit die gesamte Fläche des Frachtdecks eine gas- und flüssigkeitsdichte Fläche bzw. Wanne bildet, wobei bei einer Beheizung durch Bleedair eine vollständige Durchströmung zur möglichst gleichmäßigen Beheizung sichergestellt werden kann.

### Bezugszeichen

- 10: Hohlprofil
- 11: Deckplatte
- 12: Bodenplatte
- 13: randseitiger Steg
- 14: randseitiger Steg
- 15: innerer Steg
- 16: innerer Steg
- 20, 20': Anschluss
- 21: elektrisches Heizelement
- 30: Halteprofil
- 31: Wendekörper
- 32: Funktionsfläche
- 33: Rolleneinheit
- 34: Kugeleinheit
- 35, 35': Entwässerungsöffnung
- 36: Montageschiene

## Patentansprüche

1. Bodenelement für ein Ladedeck eines Flugzeugs, das als Hohlprofil (10) mit einer Deckplatte (11) und einer Bodenplatte (12), die durch Stege (13 bis 16) miteinander verbunden sind, aufgebaut ist,
wobei das Hohlprofil (10) mindestens abschnittsweise als Leitung zum Durchleiten von Flüssigkeiten und/oder Gasen ausgebildet ist,
**dadurch gekennzeichnet, dass** die Bodenplatte (12) mit randseitig abschließenden Stegen (13,14) eine flüssigkeitsdichte Wanne zum Auffangen anfallender Flüssigkeiten bildet, die an die Deckplatte (11) angeschlossen ist.

2. Bodenelement nach einem der vorhergehenden Ansprüche, **dadurch gekennzeichnet, dass** an der Bodenplatte (12) Anschlüsse (20, 20') zum Ableiten von Flüssigkeit vorgesehen sind.

3. Bodenelement nach einem der vorhergehenden Ansprüche, **dadurch gekennzeichnet, dass** Heizeinrichtungen zum Beheizen des Bodenelements, insbesondere der Bodenplatte (12) vorgesehen sind.

4. Bodenelement nach Anspruch 3, **dadurch gekennzeichnet, dass** das Hohlprofil (10) mit einem Anschluss an ein Heizungssystem des Flugzeugs derart angeschlossen ist, dass das Hohlprofil (10) beheizbar ist.

5. Bodenelement nach einem der Ansprüche 3 oder 4,
**dadurch gekennzeichnet, dass**
die Heizeinrichtungen elektrische Heizelemente (21) umfassen.

6. Bodenelement nach einem der vorhergehenden Ansprüche,
**dadurch gekennzeichnet, dass**
das Hohlprofil (10) vorzugsweise einstückig eingearbeitete Halteprofile (30), insbesondere Sitzschienenprofile in der Deckplatte (11) aufweist.

7. Bodenelement nach einem der vorhergehenden Ansprüche,
**dadurch gekennzeichnet, dass**
Funktionselemente, insbesondere Wendekörper (31) mit mehreren Funktionsflächen (32) und Funktionseinheiten (30, 33, 34) im Hohlprofil (10) angeordnet sind.

8. Verwendung eines Bodenelements nach einem der Ansprüche 1 bis 7, zum flüssigkeits- und/oder gasdichten Abtrennen eines Raumes oberhalb des Ladedecks von einem Raum unterhalb des Frachtdecks.

9. Verwendung nach Anspruch 8,
wobei in den Frachtraum eingebrachte Flüssigkeit im Hohlprofil aufgefangen, gesammelt und abgeleitet wird.

## Claims

1. Floor element for a loading deck of an aircraft, constructed in the form of a hollow profile (10) having a cover plate (11) and a base plate (12) which are connected to one another by webs (13 to 16),
the hollow profile (10) being at least in some regions constructed as a conduit for the passage of fluids and/or gases,
**characterised in that**
the base plate (12), together with webs (13, 14) that terminate the edges, forms a fluid-tight trough for capturing any fluids that accumulate, which trough is attached to the cover plate (11).

2. Floor element according to any one of the preceding claims,
**characterised in that**
the base plate (12) is provided with ports (20, 20') for discharging fluid.

3. Floor element according to either one of the preceding claims,
**characterised in that**
heating devices for heating the floor element, especially the base plate (12), are provided.

4. Floor element according to claim 3,
**characterised in that**
the hollow profile (10) is connected by a port to a heating system of the aircraft in such a way that the hollow profile (10) can be heated.

5. Floor element according to either one of claims 3 and 4,
**characterised in that**
the heating devices comprise electrical heating elements (21).

6. Floor element according to any one of the preceding claims,
**characterised in that**
the hollow profile (10) has holding profiles (30), preferably integrally incorporated holding profiles, especially seat rail profiles in the cover plate (11).

7. Floor element according to any one of the preceding claims,
**characterised in that**
functional elements, especially turning members (31) having a plurality of functional surfaces (32) and functional units (30, 33, 34), are arranged in the hollow profile (10).

8. Use of a floor element according to any one of claims 1 to 7,
for fluid-tight and/or gas-tight separation of a space above the loading deck from a space below the cargo deck.

9. Use according to claim 8,
wherein fluid introduced into the cargo hold is captured in the hollow profile, collected and discharged.

## Revendications

1. Élément de plancher destiné au pont de chargement d'un avion, qui est construit sous la forme d'un profilé creux (10) avec une plaque de couverture (11) et une plaque de fond (12), qui sont reliées l'une à l'autre par des nervures (13 à 16), dans lequel le profilé creux (10) est réalisé au moins localement sous la forme d'une conduite pour le passage de liquides et/ou de gaz, **caractérisé en ce que** la plaque de fond (12) forme avec des nervures de fermeture latérales (13, 14) une cuvette étanche au liquide destinée à recueillir des liquides qui s'écoulent, et qui est raccordée à la plaque de couverture (11).

2. Élément de plancher selon une des revendications précédentes, **caractérisé en ce qu'**il est prévu sur la plaque de fond (12) des raccords (20, 20') destinés à l'évacuation de liquide.

3. Élément de plancher selon l'une quelconque des revendications précédentes, **caractérisé en ce qu'**il est prévu des dispositifs de chauffage destinés au chauffage de l'élément de plancher, en particulier de la plaque de fond (12).

4. Élément de plancher selon la revendication 3, **caractérisé en ce que** le profilé creux (10) est raccordé par un raccord à un système de chauffage de l'avion, d'une manière telle que le profilé creux (10) puisse être chauffé.

5. Élément de plancher selon l'une quelconque des revendications 3 ou 4, **caractérisé en ce que** les dispositifs de chauffage comprennent des éléments chauffants électriques (21).

6. Élément de plancher selon l'une quelconque des revendications précédentes, **caractérisé en ce que** le profilé creux (10) présente des profilés de maintien (30) de préférence façonnés d'une seule pièce, en particulier des rails de siège profilés dans la plaque de couverture (11).

7. Élément de plancher selon l'une quelconque des revendications précédentes, **caractérisé en ce que** des éléments fonctionnels, en particulier des corps rotatifs (31) avec plusieurs faces fonctionnelles (32) et plusieurs unités fonctionnelles (30, 33, 34) sont disposés dans le profilé creux (10).

8. Utilisation d'un élément de plancher selon l'une quelconque des revendications 1 à 7, pour la séparation étanche aux liquides et/ou aux gaz d'un espace au-dessus du pont de chargement et d'un espace en dessous du pont à fret.

9. Utilisation selon la revendication 8, dans laquelle un liquide introduit dans la soute est recueilli, accumulé et évacué dans le profilé creux.
